# EUROPEAN PATENT SPECIFICATION

(11) **EP 0 458 784 B1**
(45) Date of publication and mention of the grant of the patent: **28.09.1994**
(21) Application number: 89904287.3
(22) Date of filing: 16.02.1989
(51) Int. Cl.: B64B 1/58, B64B 1/70

(54) **Airship comprising a device for height adjustment**
Luftschiff mit einer Regelanordnung für die Höhe
Dirigeable comportant un dispositif de réglage de l'altitude

(43) Date of publication of application: 04.12.1991
(73) Proprietor: WINTZELL, Bruno, S-115 21 Stockholm (SE); NOREN, Torsten Anders Bertil, S-126 48 Hägersten (SE)
(72) Inventor: NOREN, Torsten, Anders, Bertil, S-450 81 Grebbestad (SE)
(74) Representative: Onn, Thorsten
(86) International application number: PCT/SE89/00068
(87) International publication number: WO 90/09312

(56) References cited:
- FR-A- 2 318 783
- SE-A- 8 206 863
- SE-A- 8 703 238
- US-A- 1 577 756
- US-A- 1 648 935
- US-A- 1 682 405
- US-A- 1 853 376
- US-A- 4 773 617

## Description

The present invention relates to airships, and in particular to apparatus för adjusting the height of an airship, the apparatus including a floating body of tube-like supporting gas containers and air bags.

In airships known up to now, the supporting body comprises one or more tube-like supporting gas containers and air bags arranged inside each container. When several containers are used they are not interconnected, but are mutually free. Air is supplied via air lines for filling the bags. In the present state of the art, only local variations in air pressure, temperature etc can be compensated for internal air bags, i.e. neither fuel nor load (i.e. available load), which are usually compensated by sandbags or the like.

From SE-A-8206286-3 is previously known an airship comprising a floating body of tube-like supporting gas containers and air bags, wherein the air bags for adjusting the height of the airship being disposed outside said supporting gas containers and can be filled with compressed air from a fan-compressor means and drained of compressed air by valves for reducing and increasing, respectively, of the height of the airship. From US-A-1 577 756 there is also known an airship wherein inflatable air bags are located below the gas bags and wherein the inflation of the air bags increases the total weight of the airship while simultaneously decreasing the supporting gas volume, and vice versa.

The object of the invention is to achieve a floating body with a relationship between strength and weight such that trimming required by air pressure and temperature can be carried out and the available load can be compensated within the capacity of known materials.

This object is attained with the airship according to claim 1, which is distinguished in that the air bags are disposed between the supporting gas containers such as to connect the latter to each other.

The inventive airship is further distinguished in that each air bag can contain one or more cells.

In a preferred embodiment of the inventive airship, the floating body includes at least three supporting gas containers, defining by their air bags an interior space for supporting gas.

In another preferred embodiment of the inventive airship, the floating body includes at least four supporting gas containers, and the interior space may include at least one further air bag dividing the interior space into at least two smaller, longitudinal spaces. In addition, there can be envisaged six, seven, eight etc separated supporting gas containers.

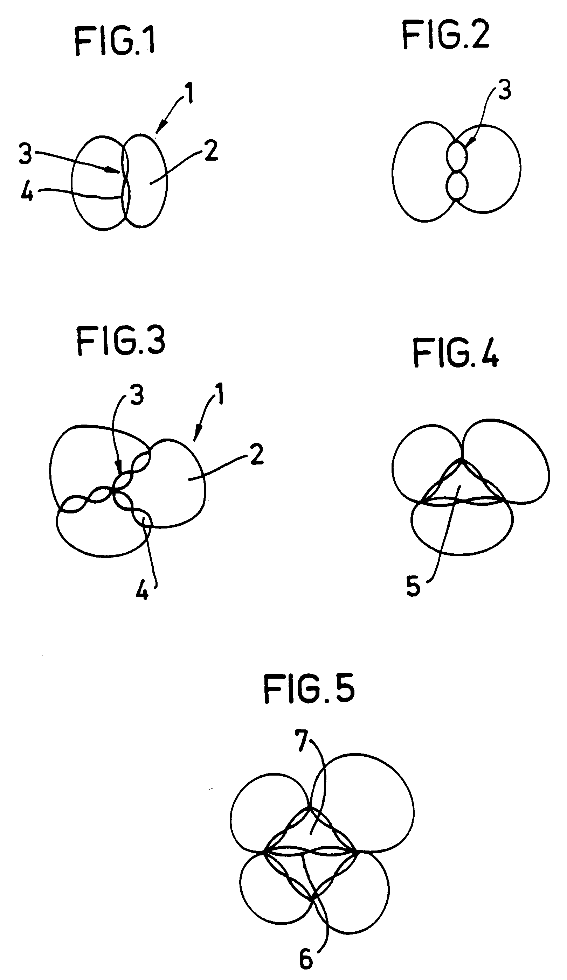

The invention will now be described in more detail below, and with reference to the accompanying drawings, where Figure 1 is a cross section through a first embodiment of the inventive airship, the air bags not being filled with compressed air, Figure 2 illustrates the same arrangement as in Figure 1, but with the air bags filled with compressed air, Figure 3 schematically illustrates a second embodiment of the inventive airship, Figure 4 schematically illustrates a third embodiment of the inventive airship, and Figure 5 a fourth embodiment of the inventive airship.

As will be seen from figures 1 and 2, the airship including means for adjusting the height of the airship in accordance with the invention a floating body 1 comprises supporting gas containers 2, which become tube-shaped due to interior excess pressure, and air bags 3, which may be filled, for reducing the height of the airship, with copressed air from an unillustrated fan-compressor means connected thereto, and for increasing height may be vented by unillustrated valves on the air bags. The supporting gas containers 2 and air bags 3 are made from a flexible but unstretchable material, and preferably of the same material. Due to the use of several smaller supporting gas containers instead of a large one, and air bags which are each divided into several cells 4, the assortment of woven fabrics available for them is widened, since less excess pressure is required. It is particularly emphasised that there is thus afforded the opportunity of selecting a woven fabric of low weight, which of course considerably facilitates both manufacture and height adjustment. By the air bags 3 being disposed outside and between the supporting gas containers as well as connecting the latter to each other there is also obtained the advantage that the total weight of the floating body may be increased or decreased, while simultaneously decreasing or increasing its supporting gas volume, resulting in more effective height adjustment than that obtained by supporting gas containers solely having internal air bags, where it is merely possible to increase or decrease the total weight.

The second embodiment of the inventive airship illustrated in Figure 3 comprises three supporting gas containers 2, each having an air bag 3 meeting at a common point, the third embodiment of the inventive airship illustrated in Figure 4 and also having three containers 2 with their individual air bags 3 is one where the containers 2 define an interior space 5, which may be filled with supporting gas, thus increasing the lifting capacity of the floating body.

The fourth embodiment, illustrated in Figure 5, of the inventive airship comprises four supporting gas containers 2, each with an air bag 3 and defining an interior space 5, as with the airship of Figure 4, and a further air bag 6 can be used to divide this space into two smaller, longitudinal spaces 7. Finally, it is pointed out, that one or more of the air bags 3 and 6 can be permanently filled with compressed air, in which case they serve as stiffening beams.

## Claims

1. An airship comprising a floating body of tube-like supporting gas containers and air bags, the air bags for adjusting the height of the airship being disposed outside said supporting gas containers and can be filled with compressed air from a fan-compressor means and drained of compressed air by valves for reducing and increasing respectively of the height of the air ship, **characterized** in that the air bags (3) are disposed between the supporting gas containers (2) and connect the supporting gas containers with each other.

2. An airship as claimed in claim 1, **characterized** in that each air bag (3) contains one or more cells (4).

3. An airship as claimed in claim 1 or 2, **characterized** in that it comprises at least three supporting gas containers (2) which define by their air bags (3) an interior space (5) for supporting gas.

4. An airship as claimed in claim 3, **characterized** in that it comprises at least four supporting gas containers (3), and that the interior space (5) comprises at least one further air bag (6) dividing the interior space into at least two smaller, longitudinal spaces (7).

5. An airship as claimed in any one of claims 1-4, **characterized** in that at least one air bag (3, 7), but not all, is permanently filled with compressed air.

## Patentansprüche

1. Luftschiff mit einem rohrartige, tragende Gasbehälter und Luftsäcke umfassenden schwebenden Körper, wobei die Luftsäcke zum Einstellen der Höhe des Luftschiffs außerhalb der tragenden Gasbehälter angeordnet sind und mit verdichteter Luft von einer Gebläse-Verdichtereinrichtung füllbar sind und wobei verdichtete Luft durch Ventile zum Verringern bzw. Vergrößern der Höhe des Luftschiffs aus den Luftsäcken ablaßbar ist,
dadurch gekennzeichnet
daß die Luftsäcke (3) zwischen den tragenden Gasbehältern (2) angeordnet sind und die tragenden Gasbehälter miteinander verbinden.

2. Luftschiff nach Anspruch 1,
dadurch gekennzeichnet, daß jeder Luftsack (3) eine oder mehrere Zellen (4) umfaßt.

3. Luftschiff nach Anspruch 1 oder 2,
dadurch gekennzeichnet, daß es wenigstens drei tragende Gasbehälter (2) umfaßt, welche durch ihre Luftsäcke (3) einen Innenraum (5) für tragendes Gas bilden.

4. Luftschiff nach Anspruch 3,
dadurch gekennzeichnet, daß es wenigstens vier tragende Gasbehälter (3) umfaßt und daß der Innenraum (5) wenigstens einen, den Innenraum in wenigstens zwei kleinere Längsräume (7) unterteilenden weiteren Luftsack (6) umfaßt.

5. Luftschiff nach wenigstens einem der Ansprüche 1-4,
dadurch gekennzeichnet, daß wenigstens ein Luftsack (3, 7), jedoch nicht alle, permanent mit verdichteter Luft gefüllt ist.

## Revendications

1. Dirigeable comprenant un corps flottant constitué par des récipients de gaz sustentatoire tubulaires et des coussinets d'air, les coussinets d'air servant à ajuster la hauteur du dirigeable étant disposés à l'extérieur des récipients de gaz sustentatoire et pouvant être remplis d'air comprimé à partir d'un ventilateur-compresseur et libérer de l'air comprimé par des soupapes afin de réduire ou d'augmenter respectivement la hauteur du dirigeable, caractérisé en ce que les coussinets d'air (3) sont disposés entre les récipients de gaz sustentatoire (2) et relient les récipients de gaz sustentatoire entre eux.

2. Dirigeable selon la revendication 1, caractérisé en ce que chaque coussinet d'air (3) contient une ou plusieurs cellules (4).

3. Dirigeable selon la revendication 1 ou 2, caractérisé en ce qu'il comprend au moins trois récipients de gaz sustentatoire (2) qui définissent par leurs coussinets d'air (3) un espace intérieur (5) pour le gaz sustentatoire.

4. Dirigeable selon la revendication 3, caractérisé en ce qu'il comprend au moins quatre récipients de gaz sustentatoire (3) et en ce que l'espace intérieur (5) comprend au moins un coussinet d'air supplémentaire (6) divisant l'espace intérieur en au moins deux plus petits espaces longitudinaux (7).

5. Dirigeable selon l'une quelconque des revendications 1-4, caractérisé en ce qu'au moins un coussinet d'air (3, 7) mais non la totalité de ceux-ci, est rempli en permanence d'air comprimé.
